# EUROPÄISCHE PATENTSCHRIFT

(11) **EP 2 705 905 B1**
(45) Veröffentlichungstag und Bekanntmachung des Hinweises auf die Patenterteilung: **14.06.2017**
(21) Anmeldenummer: 13181677.9
(22) Anmeldetag: 26.08.2013
(51) Int. Cl.: B05B 12/02, B05B 13/04, B05C 9/14, B41J 3/407, B05B 12/08, B05C 11/10, B41J 11/00

(54) **Verfahren und Vorrichtung zum Bebildern und/oder Lackieren der Oberfläche von Gegenständen**
Method and apparatus for printing pictures on and/or painting the surfaces of objects
Procédé et dispositif d'illustration et/ou de peinture de la surface d'objets

(30) Priorität: 05.09.2012 DE 102012017538
(43) Veröffentlichungstag der Anmeldung: 12.03.2014
(73) Patentinhaber: Heidelberger Druckmaschinen AG, 69115 Heidelberg (DE)
(72) Erfinder: Pitz, Heiner Dr., 69469 Weinheim (DE); Matern, Alexander, 68723 Oftersheim (DE)

(56) Entgegenhaltungen:
- WO-A1-2004/007089
- DE-A1- 10 323 761
- DE-A1-102006 035 243
- DE-A1-102012 006 371
- US-A1- 2007 062 383

## Beschreibung

Die Erfindung betrifft ein Verfahren zum Behandeln der Oberfläche von Gegenständen wie z. B. Fahrzeugen etc. mit Fluiden, bei dem das Fluid mittels eines rechnergesteuert verfahrbaren ersten Werkzeugs aufgetragen und anschließend mit einem zweiten rechnergesteuert verfahrbaren Werkzeug weiter behandelt wird, beispielsweise getrocknet, gehärtet oder mit einer weiteren Materialschicht überzogen wird. Ein derartiges Verfahren ist beispielsweise in der deutschen Offenlegungsschrift DE 37 37 455 A1 beschrieben. Bei dem bekannten Verfahren werden mit einem Sprühdüsensystem, das am Ende eines Roboterarms befestigt ist, Automobilkarosserien auch mehrfarbig lackiert und anschließend durch UV-Strahlung gehärtet. Aus der genannten Schrift ist es auch bekannt, die aufgetragenen Farben nacheinander zu Härten.

Nun ist es allerdings nicht ohne Weiteres möglich, mit Inkjet-Druckköpfen zum Einen hochaufgelöste Rasterbilder und zum Anderen satte Vollflächen zu drucken. Für die Vollflächen muss die Tinte der einzelnen Druckpunkte eines Farbauszuges ineinanderfließen. Hierfür wird eine gewisse Mindestzeit benötigt. Erfolgt die Trocknung allerdings zu spät, entstehen unscharf verlaufende Konturen oder es können sich insbesondere bei vertikaler Ausrichtung des zu bebildernden Objekts in Folge der Schwerkraft nach unten gerichtete Ansammlungen ergeben, die den Bildeindruck stören. Bei Farbsystemen, die nicht von allein trocknen sondern durch Bestrahlung, beispielsweise Infrarot- oder UV-Strahlung oder durch Heißluft und ganz besonders auf nicht saugenden Substraten getrocknet bzw. gehärtet werden, gilt es deshalb ein zeitliches Prozessfenster zu beachten, innerhalb dessen die Farbe spreiten und dadurch die gewünschte ununterbrochene Vollfläche bilden kann.

Dieses Prozessfenster ist abhängig vom Substrat des zu bebildernden Objekts, beispielsweise der Oberflächenenergie, der Saugfähigkeit, dem momentanen Zustand, ggf. mit oder ohne Vorbehandlungen wie Primern, Plasmabehandlung etc., sowie von der Tinte selbst, d. h. deren Viskosität und Oberflächenspannung. Beim industriellen UV-Inkjet-Druck bei Auflösungen von ca. 200 - 600 dpi sind Spreitzeiten im Sekundenbereich gängig.

Die Produktionsgeschwindigkeiten für das Bebildern von Oberflächen mit Inkjet Systemen sind nun in einen Bereich vorgedrungen, in dem der Abstand zwischen den Inkjet Druckköpfen und den dahinter angeordneten Strahlern zum Trocknen oder Pinnen, d. h. dem Austrocknen der Tinte mehrere Dezimeter betragen können. Beim Bedrucken von ebenen Oberflächen, insbesondere wenn das Substrat gefördert wird, sind derartige Abstände handhabbar. Anders ist die Situation bei von Robotern geführten Drucksystemen zur Bebilderung von stark gekrümmten oder unregelmäßigen Objektoberflächen. Denn dann ist es eher schwierig oder gar unmöglich eine Bahn zu programmieren, die die Anforderungen erfüllt, dass sowohl der Arbeitsabstand für die einzelnen Düsen des Inkjet Kopfes eingehalten wird, als auch für das im fixen Abstand hinterher geführte Trocknerwerkzeug, ohne dass es zu Kollisionen mit der Oberfläche des zu bebildernden Objekts kommt.

Aus der DE 10 2012 006 371 A1 ist bereits ein Verfahren zum Bedrucken eines Objekts, z.B. eines Fahrzeugs bzw. dessen Karosserie, bekannt, wobei wenigstens ein Bereich der Oberfläche des Objekts bedruckt wird. Das Verfahren weist die folgenden Verfahrensschritte auf: Bereitstellen eines Bildes; Dreidimensionales Vermessen wenigstens des Bereichs; Erzeugen einer mit dem Bereich korrespondierenden Menge von Raumpunkten; Erzeugen eines mit dem Bereich korrespondierenden, dreidimensionales Netzes; Erzeugen von Bahn-Daten, d.h. einer dreidimensionalen Bahn zur Bewegung eines Roboters für einen Tintenstrahl-Druckkopf; Erzeugen von Raster-Daten, d.h. einer RasterMatrix, insbesondere einer drei- oder höher-dimensionalen Rastermatrix, zur Ansteuerung des Tintenstrahl-Druckkopfes; Bewegen des Roboters, z.B. eines Gelenkarm-Roboters, unter Verwendung der Bahn-Daten; und Drucken des Bildes mit dem Tintenstrahl-Druckkopf unter Verwendung der Raster-Daten. Das Verfahren erlaubt das mehrfarbige Bedrucken beliebig geformter, so genannter 3D-Oberflächen mit beliebigen Bildern.

Es ist deshalb die Aufgabe der vorliegenden Erfindung, ein Verfahren und eine Vorrichtung zu schaffen, mit der sich in optisch ansprechender Weise auch Vollflächen aus weiter zu behandelnden Fluiden mit Inkjet Köpfen auf unebene Gegenstände aufbringen lassen. Diese Aufgabe wird mit den in Ansprüchen 1 bzw. 14 angegebenen Merkmalen gelöst.

Ein erfindungsgemäßes Verfahren zum Behandeln der Oberfläche von Gegenständen/Fahrzeugen etc. mit Fluiden, bei dem das Fluid mittels eines rechnergesteuert verfahrbaren ersten Werkzeugs aufgetragen und anschließend mit dem zweiten rechnergesteuert verfahrbaren Werkzeug weiterbehandelt wird, wobei der Zeitverzug (zwischen dem Auftragen des Fluids auf den Gegenstand und der anschließenden Weiterbehandlung an das Spreitverhalten des Fluids angepasst ist, zeichnet sich dadurch aus, dass der Zeitverzug zwischen dem Auftragen des Fluids auf den Gegenstand und der anschließenden Weiterbehandlung an das Spreitverhalten des Fluids angepasst ist, dass das Fluid aus mehreren Farben besteht und dass beim Bebildern der Oberfläche mit mehreren Farben in mehreren Abschnitten erst nur eine Farbe in mehreren Abschnitten aufgetragen und getrocknet wird und danach die nächste Farbe in gleicher Weise abschnittsweise aufgetragen und getrocknet wird. Jedoch ist es auch möglich, den Zeitverzug abhängig von der Neigung der beispielsweise zu bebildernden Flächenteile etwas unterschiedlich einzustellen, um dem Einfluss der Schwerkraft Rechnung zu tragen, beispielsweise bei vertikalen Flächenteilen einen kürzeren Zeitverzug einzuplanen als bei waagerechten Flächenteilen, wenn man nicht ohnehin durch eine entsprechende Ausrichtung des bebildernden Gegenstandes dafür Sorge trägt, dass die zu bebildernden Flächen im Moment der Bebilderung im Wesentlichen waagerecht ausgerichtet sind.

Eine erfindungsgemäße Vorrichtung zum Durchführen des erfindungsgemäßen Verfahrens mit einem Steuerrechner, der eine oder simultan zwei Bahnsteuerungen für ein Auftragswerkzeug und ein Weiterbehandlungswerkzeug bedient und einem Speicher, in dem die zu steuernde(n) Bahn(en) und Verfahrgeschwindigkeiten abgelegt sind, derart, dass sich ein an das Spreitverhalten der aufzutragenden Fluid angepasster Zeitverzug für die Orte ergibt, die von den beiden Werkzeugen nacheinander überfahren werden, zeichnet sich dadurch aus, dass das Weiterbehandlungswerkzeug über eine oder mehrere Bewegungsachsen mit dem Auftragswerkzeug verbunden ist und die Lage des Weiterbehandlungswerkzeugs zum Auftragswerkzeug über die Achsen verstellbar ist.

Mit dem Begriff "Behandeln" oder "Weiterbehandeln" des Fluids sollen alle Prozesse gemeint sein, über die Eigenschaften des Fluids in irgendeiner Weise aktiv verändert werden. Unter dem Begriff "Trocknen" sollen alle Varianten des aktiven Trocknens verstanden werden, also z. B. das Trocknen mit Infrarotstrahlung oder Heißluft, das Härten mit UV- oder Elektronenstrahlung und das sogenannte "Pinnen", bei dem die Farbe z. B. durch UV-Strahlung erst angetrocknet wird, bevor sie in einem zweiten Schritt endgültig durchgehärtet wird.

Es kann zweckmäßig sein, für das Auftragen des Fluids und das Weiterbehandeln des Fluids zwei separate Bewegungssysteme bzw. Roboterarme vorzusehen, mit denen zum einen das Werkzeug für das Auftragen des Fluids und zum Anderen das Werkzeug für das Weiterbehandeln simultan aber mit einem Ortsversatz bewegt wird. Durch die separate Ansteuerung der beiden Werkzeuge lassen sich dann auch bei unregelmäßigen Objekten Kollisionen mit der Oberfläche vermeiden.

Weitere Vorteile bietet ein System, bei dem am Ende des ersten Manipulators also z. B. Roboterarms das Werkzeug für das Auftragen des Fluids und über eine oder mehrere weitere Achsen bewegbar das Werkzeug für die Weiterbehandlung direkt angebunden ist. Auf diese Weise lässt sich z. B. der Abstand zwischen den Werkzeugen und gegebenenfalls die Bahn für die Nachfahrbewegung in gewissen Grenzen einstellen. So kann auch ohne kompletten zweiten Roboterarm der Zeitverzug zwischen dem Auftrag des Fluids und seiner Weiterbehandlung, also z. B. dem Trocknen bei gegebener Fahrgeschwindigkeit entsprechend der Spreitzeit über den Abstand zwischen den Werkzeugen eingestellt werden kann. Besonders vorteilhaft ist es allerdings, wenn das Auftragen und weiterbehandeln intermittierend mit einem Zeitversatz zwischen dem Verfahren des ersten Werkzeugs und dem Verfahren des zweiten Werkzeugs erfolgt. Denn dann kann ein einziger Roboterarm im intermittierenden Betrieb beide Werkzeuge nacheinander über die zu bebildernden Flächen führen. Zweckmäßigerweise erfolgt dann das Auftragen des Fluids auf die Objektoberfläche in Abschnitten, deren Größe und Lage schon bei der Planung der Bewegungsabläufe der verfahrbaren Werkzeuge berücksichtigt werden kann und, unter Berücksichtigung der Vordruckgeschwindigkeit und des an das Spreitverhalten des Fluids angepassten Zeitverzugs.

Bei dieser Verfahrensvariante kommt man mit einem einzigen Manipulatorsystem für das Werkzeug zum Auftragen des Fluids und das Werkzeug zum Weiterbehandeln aus d. h. man benötigt nur einen Roboter um das betreffende Objekt mit Vollflächen zu versehen. Es kann auf diese Weise stets der jeweils optimale Arbeitsabstand für jedes Werkzeug trotz gekrümmter Oberflächen präzise eingehalten werden. Bei dem Roboter kann es sich um einen mit Linearführungen oder Dreh- bzw. Schwenkgelenken oder einen mit kombinierten Dreh- und Linearachsen handeln.

Auch bei dieser Verfahrensvariante können z. B. unterschiedliche Farben einzeln oder gemeinsam mit einem Inkjetkopf auf die Objektoberfläche aufgetragen werden. Die Farben werden dann beispielsweise in jedem Abschnitt einzeln erst aufgetragen und dann getrocknet, bevor der nächste Abschnitt bebildert wird, oder es wird in mehreren Abschnitte immer erst eine erste Farbe aufgetragen und getrocknet, bevor dann nach dem Bebildern eines größeren Bereichs der Objektoberfläche in mehreren Abschnitten die nächste Farbe, auch wieder abschnittsweise, aufgetragen und getrocknet wird, oder es werden alle Farben gleichzeitig in einem Abschnitt der Oberfläche aufgetragen und dann gemeinsam getrocknet, bevor der nächste Abschnitt in Angriff genommen wird.

Es ist weiterhin zweckmäßig, beim abschnittsweisen Auftragen und Trocknen von Farben die Abschnitte an die Geometriemerkmale der zu bebildernden Fläche anzupassen. Ist z. B. die zu bebildernde Vollfläche nur 450 mm lang, obwohl unter Berücksichtigung der Spreitzeit und der Vordruckgeschwindigkeit 500 mm bebildert werden können, so wird gleichwohl an der Grenze des Bildelements die Bebilderung beendet und gegebenenfalls nach einem kurzen Zeitverzug der Trockenvorgang begonnen, um zu vermeiden, dass sich die nacheinander bebilderten Abschnitte innerhalb des Motivs aneinander anschließen, oder man legt die Endpunkte der bebildernden Abschnitte im Falle der Bebilderung von vollflächigen Zahlen oder Buchstaben zwischen zwei Lettern.

In gewissen Grenzen ist auch möglich und zweckmäßig, die Druckgeschwindigkeit und/oder die Rückfahrgeschwindigkeit zu erhöhen, so dass bei möglichst konstant einzuhaltender Spreitzeit für die Farbe die Länge des jeweils zu überstreichenden Bildabschnitts auf die Grenzen des jeweiligen Motivs oder der Teilfläche fällt, um auch hier einen Ansatz der einzelnen Bebildungs- und Trocknungsabschnitte innerhalb des Motivs zu vermeiden.

Die oben geschilderten Maßnahmen können generell auch angewendet werden, um die Gesamtprozesszeit zu optimieren.

Auch die Spreitzeit kann im gewissen Maß innerhalb eines Druckauftrags variiert werden, Variationen von 10 % sind in der Regel unkritisch, 20 % oft noch nicht sichtbar und +/-50 % noch tollerabel, wobei die Variation des Zeitverzugs zwischen dem Auftragen der Farbe und dem Härten unter Anpassung an das Spreitverhalten auch von der Eigenschaft der Objektoberfläche, also mehr oder weniger saugend, grundiertes Metall oder Glasoberfläche, und von der Ausrichtung der Flächenelemente in Bezug auf die Vertikale abhängen können.

Es ist auch möglich, die Spreitzeit während des Prozesses der Oberflächenbehandlung zu ermitteln und den daraus folgenden Zeitverzug zu berechnen und für eine online-Regelung zu verwenden. Dies geschieht z. B. durch die Beobachtung des Spreitverhaltens von aufgetragenen Fluidpunkten oder Flächen mit einer Kamera und einer online-Auswertung dahingehend, innerhalb welcher Zeitspanne der aufgetragene Fluidpunkt oder die Fluidfläche eine vorher definierte Größe erreicht haben. Das Ergebnis geht dann in die Regelung der Verfahrgeschwindigkeit und den Zeitverzug zwischen Auftragen der z. B. Farbe und dem Trocknen ein.

Weitere Vorteile der Erfindung ergebe sich aus den nachfolgenden Beschreibungen von Ausführungsbeispielen anhand der Figuren 1 bis 6c der beigefügten Zeichnungen.

In den Zeichnungen zeigen:
Figur 1 eine schematische Seitenansicht eines bevorzugten Ausführungsbeispiels auf der Basis eines Gelenkarmroboters.
Figur 2 ist eine detaillierte Prinzipskizze des am Ende des Roboterarms 4 angebrachten Druckkopfs 5 aus Figur 1.
Figur 3 zeigt in vergrößertem Maßstabe den mit 33 bezeichneten Bereich in der Figur 2.
Figur 4a-d schematisiert die gejetteten Inkjet-Tropfen aus Figur 3 während verschiedener Phasen des Spreitens.
Figur 5 eine vergrößerte Aufsicht auf die Oberfläche 13 aus Figur 3.
Figur 6a-c das Ende des Gelenkarms 4 aus Figur 1 in vergrößerter, perspektivischer Ansicht.
Figur 7a und b das Ende eines alternativ ausgebildeten Gelenkarms 104 in zwei verschiedenen Vergrößerungen.

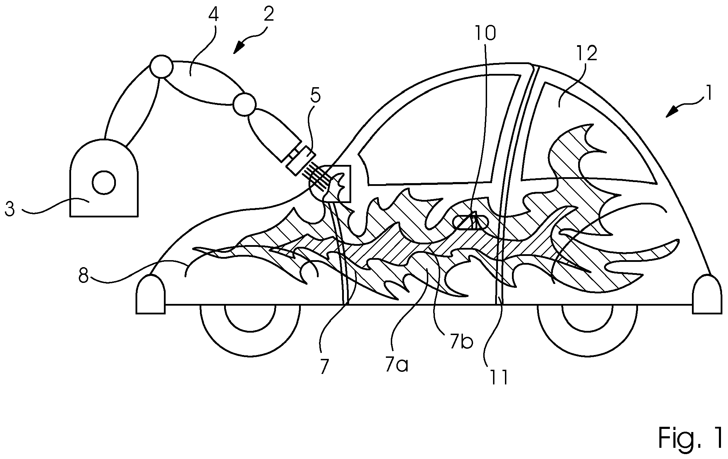

In der Figur 1 ist von der Seite her ein Fahrzeug 1 gezeigt, dass mit Hilfe eines Gelenkarmroboters 2 bedruckt wird. Dieser besitzt eine Basis 3 und einen aus mehreren beweglichen Gliedern 4 bestehenden Roboterarm. An dessen Ende ist ein Druckkopf 5 befestigt. Die Basis 3 kann drehbar und verfahrbar gelagert sein, so dass der Arm 4 mit dem Druckkopf 5 alle Stellen des Fahrzeugs 1 erreichen kann. Gegebenenfalls ist das Fahrzeug auf einer hier nicht dargestellten Aufnahme gehalten, über die es entweder um die Vertikale gedreht oder um eine horizontale Achse gekippt werden kann.

Der Druckkopf 5 befindet sich während des Druckens in einem geringen Arbeitsabstand zur Oberfläche des Fahrzeugs 1 und jettet dabei Tintentropfen aus und zwar mit einem ausreichend hohen Impuls, damit diese auf die Oberfläche des Fahrzeugs 1 auftreffen und darauf haften. Im beschriebenen Beispiel wird das Fahrzeug 1 mit einem Bild 7 bedruckt. Das Bild 7 kann verschiedene Bereiche 7a und 7b ausweisen die sich z. B. darin unterscheiden, dass sie unterschiedliche Farben aufweisen. Sie können sich auch dadurch unterscheiden, dass ein Bereich gerastert ist, um unterschiedlich intensive Halbtonstufen zu drucken, und in einem anderen Bereich die Farbe im Vollton verdruckt wird, so dass sich ununterbrochene Flächen ergeben.

Das Fahrzeug 1 als zu bedruckendes Objekt weist eine gekrümmt Oberfläche auf, beispielsweise einen Kotflügel 8, der sich aus der Seitenwand heraus wölbt und daher sowohl konvexe als konkave Krümmungen besitzt. Die Krümmungen können sehr kleine Radien aufweisen und sogar als Knicke vorliegen. Dabei können auch größere ausgedehnte Bereiche der Oberfläche des Fahrzeugs 1 einfarbig bedruckt und somit quasi lackiert werden. Bevorzugt ist das Fahrzeug jedoch bereits lackiert und das Bild wird lokal zur Verschönerung oder zum Tragen von Information, z. B. für Werbung aufgetragen, auch mit entsprechenden Lettern für Textbotschaften.

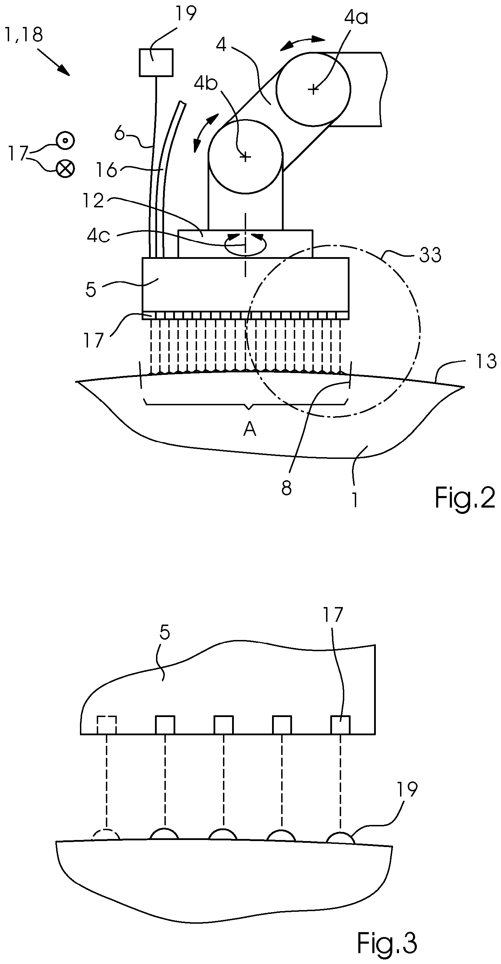

Für den Druckkopf 5, der in Figur 2 detaillierter dargestellt ist, aus denen UV-Tintentröpfchen mit einer Frequenz von 40kHz ausgestoßen werden können kann beispielsweise der unter der Bezeichnung "Spectra Galaxy ja256/80 AAA" der Firma Fuji Dimatix Inc. aus Lebanon, New Hampshire verwendet werden. Er besitzt 256 Düsen 17. Der Druckkopf 5 ist seinerseits an dem Gelenkarm 4 eines Roboters z. B. vom Typ KR60-3 der Firma Kuka aus Deutschland aufgenommen ist. Auf dem gezeigten Beispiel besitzt der Roboterarm 4 drei Gelenke 4a, 4b und 4c, über die der Roboter 2 den Druckkopf 5 über die Oberfläche 13 des Objekts 1 bewegt. Der Druckkopf 5 ist ferner über eine Farbleitung 16 und über eine Datenverbindungsleitung 6 mit einem Tintenvorratsbehälter einerseits und einem Rechner 19 andererseits verbunden. Diese nur schematisch dargestellten Leitungen 6 und 16 umfassen gegebenenfalls mehrere einzelne Farbversorgungsleitungen oder auch Signalleitungen, über die die einzelnen Düsen 17 des Inkjet-Druckkopfes 5 angesteuert werden.

Die Figur 2 zeigt zudem, dass der Druckkopf 5 in der dargestellten Position einen Abschnitt mit der Breite A auf die Oberfläche 13 des Objekts 1 bedruckt. Die Bewegung des Druckkopfes 5 durch den Roboter erfolgt dabei z. B. entweder in die Ebene der Figur hinein oder aus dieser heraus.

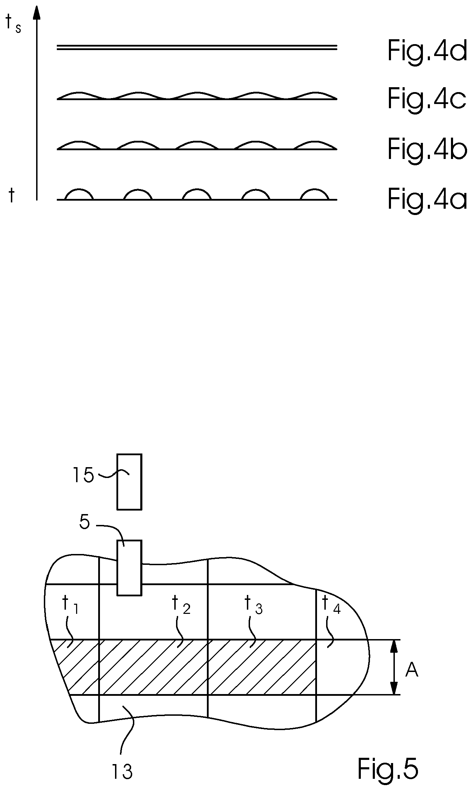

Wie aus der vergrößerten Darstellung nach Figur 3 hervorgeht, liegen die von den Düsen 17 des Druckkopfs 5 ausgestoßenen Tintentröpfchen direkt nach dem Auftreffen erst einmal nebeneinander auf der Oberfläche 13 des z. B. lackierten Fahrzeugs 1, ohne sich zu berühren oder direkt aneinander anzuschließen. Es kann eine geraume Zeit von mehreren Sekunden in der Größenordnung zwischen fünf und zehn Sekunden dauern, bis sich wie in Figur 4 dargestellt abhängig von Viskosität und Oberflächenspannung der Farbe und Oberflächenspannung bzw. Oberflächenenergie des Untergrund eine gleichmäßige bzw. gleichförmige Farbschicht in den Bereichen ausbildet, in denen der Druckkopf 5 Vollflächen drucken sollte. Dieser Zustand ist in der Figur 4 mit D bezeichnet und der dazugehörige Zeitpunkt auf der Zeitachse mit tₛ, was als optimale Spreitzeit betrachtet wird. Würde man länger zu warten, bevor getrocknet wird, verläuft die Farbe an den Bildrändern eventuell weiter, und es entstehen unscharfe Konturen, die beispielsweise bei Schriftzügen negativ ins Auge fallen.

Gemäß einer nicht erfindungsgemäßen Alternative ist nun vorgesehen, mit einem zweiten in den Figuren nicht weiter dargestellten, neben oder hinter dem Roboter 2 aufgestellten weiteren Roboter, an dessen Gelenkarm ein Strahler zum Trocknen der gejetteten Farbe angebracht ist, den Druckkopf 5 sozusagen "zu verfolgen", indem der Strahler unter Berücksichtigung der Geschwindigkeit auf der gleichen Bahn oder einer auf Grund unterschiedlicher Arbeitsabstände zwischen Druckkopf und Strahler gegebenenfalls versetzten Bahn den Strahler dem Druckkopf 5 so hinterher zu fahren, dass die gleichen Stellen auf der Oberfläche 13 in einem zeitlichen Abstand von dem Druckkopf 5 und den Strahler überstrichen werden, der dem Abstand tₛ, der optimalen Spreitzeit entspricht.

Da für die Bewegung des Druckkopfs 5 und des Strahlers unabhängige Bewegungssysteme d. h. zwei Roboter eingesetzt werden, lassen sich auch stark gekrümmte und unregelmäßige Objektoberflächen ohne Kollision mit der Objektoberfläche bedrucken und trocknen. Eine Alternative Variante für das erfindungsgemäße Verfahren sieht die Verwendung nur eines Roboters vor wie das anhand der Figur 5 erläutert ist. Hier ist der vom Druckkopf 5 vollflächig zu bedruckende Bereich der Oberfläche 13 in einzelne aneinander grenzende Streifen mit der Breite A eingeteilt, die der Breite des Druckkopfs entsprechen, und jeder Streifen wiederum in einzelne Abschnitte, deren Länge mit t₁, t₂ und t₃, etc. bezeichnet sind. Das Verfahren läuft nun so ab, dass der Roboter 2 den Druckkopf 5 beispielsweise erst einmal über den Abschnitt t₁ führt, dessen Länge so bemessen ist, dass unter Berücksichtigung der Druckgeschwindigkeit, der Rückfahrgeschwindigkeit und des in-Position-bringens eines Strahlers 15 für das Trocknen der Druckfarbe die optimierte Spreitzeit tₛ vergeht, bevor anschließen der gleiche Abschnitt mit etwa gleicher Geschwindigkeit und in die gleiche Richtung mit dem Strahlerwerkzeug 15 zum Trocknen der Druckfarbe überstrichen wird. Anschließend wird wieder der Druckkopf 5 in Arbeitsposition gebracht und anschließend der mit t₂ bezeichnete Abschnitt bedruckt und danach getrocknet, dann wieder der Abschnitt t₃ erst bedruckt und dann getrocknet usw.

Auf diese Weise wird mit nur einem Roboter ein größerer Teil der Objektoberfläche 13 vollflächig bebildert, ohne dass ein übermäßiges Spreiten und unscharfes Verlaufen stattfindet.

Für den Fall, dass die Vollflächen in den Abschnitte t₁, t₂, t₃,... in unterschiedlichen, von den Grundfarbe CMYK abweichenden Farben aus mehreren Grundfarben aufgebaut werden soll, erfolgt das Bebildern und Trocknen für jede Farbe in einem Abschnitt t₁, t₂, t₃,... für sich gesehen intermittierend, wobei zwischen den einzelnen Farbaufträgen gegebenenfalls der Druckkopf am Ende des Roboterarms 4 zu wechseln ist.

Ein ganz ähnlicher Ablauf ergibt sich, wenn vor dem Farbauftrag noch eine z. B. weiße Grundierung erfolgt, oder nach dem Bebildern noch ein Klarlack aufgetragen wird.

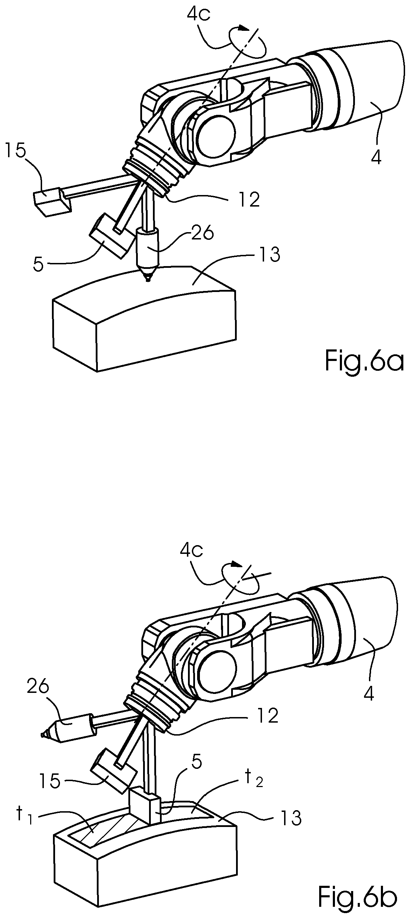

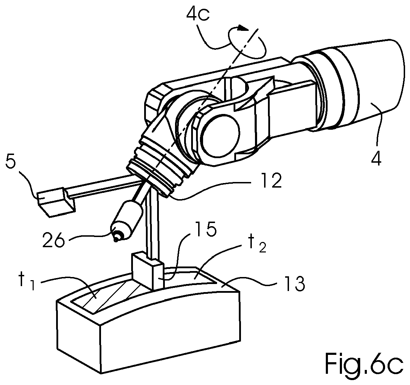

Ein Roboterarm ist in den Figuren 6 a - c dargestellt. Am Ende des Roboterarms 4 ist eine Montageplatte 12 befestigt, an der in unterschiedliche Richtungen abstehend drei verschiedene Werkzeuge angebracht sind. Bei dem Werkzeug 16 handelt es sich um ein Werkzeug zur Erzeugung von Plasmaentladungen, mit dessen Hilfe die Oberfläche so vorbehandelt werden kann, dass sie Farbe gut annimmt. Mit 5 ist ein Vierfarb-Inkiet-Druckkopf bezeichnet. Er ist nur schematisch dargestellt und die Tintenzuführungsleitungen und Signalleitungen können sich im Inneren oder außerhalb der Halterung befinden. Mit 15 ist ein Ultraviolettstrahler bezeichnet, der etwa die gleiche Breite hat wie der Inkjet-Druckkopf 5. Über die Roboterachse 4c lassen sich die drei verschiedenen Köpfe nacheinander in eine gegenüber der Oberfläche 13 des zu bedruckenden Werkstücks ausgerichtete Stellung drehen. In der Bahnplanung für den Roboterarm 4 ist nun der gesamte Bewegungsablauf für das Vorbehandeln, Bedrucken und Härten der Farbe auf der Oberfläche 3 des Objekts gespeichert. Dieser Ablauf kann so aussehen, dass zuerst die gesamte Oberfläche 13 über den Bearbeitungskopf 26 vorbehandelt, z. B. plasmabehandelt, mit UV-Strahlung, IR-Strahlung oder Strahlung im sichtbaren Bereich beaufschlagt, oder einer Koronabehandlung oder Heißluftbehandlung unterzogen wird.

Diese Phase ist in Figur 6a dargestellt. Danach wird der Druckkopf 5 in die Arbeitsposition gedreht und die Oberfläche 13 wird mit einer ersten Farbe beispielsweise Schwarz oder Cyan in Abschnitt t₁ bedruckt (Figur 6b). In der dargestellten Stellung stoppt dann der Roboterarm seinen Bewegungsablauf, fährt zum Beginn des Abschnitts t₁, dreht dort den UV-Strahler 15 in die Arbeitsposition und überstreicht dann den Abschnitt t₁ um die Farbe dort zu trocknen (Figur 6c). Sodann fährt der Roboterarm 4 wieder auf den Beginn des Abschnitts t₁ zurück und dreht den Inkjet-Kopf 5 wieder in Position, um dann die nächste Farbe im Abschnitt t₁ aufzutragen und anschließen zu härten usw. Wenn alle im Abschnitt t₁ benötigten Farben aufgedruckt und gehärtet sind, setzen sich die beschriebenen Sequenzen im Abschnitt t₂ fort, bis die ganze Oberfläche 13 mit dem gewünschten Bild versehen ist.

Alternativ ist es auch möglich, erst die Abschnitte t₁, t₂ ... nacheinander mit einer Farbe zu drucken und intermittierend abschnittsweise zu trocknen und dann wieder im Abschnitt t₁ mit der nächsten Farbe zu beginnen. Jedoch wird man, wenn man auf diese Weise dann größere Bereiche der Oberfläche 13 bebildert die Position der Werkzeuge am Ende des Roboterarms neu kalibrieren müssen, um sicherzustellen, dass die verschiedenen Farben registergenau aufeinander gedruckt werden.

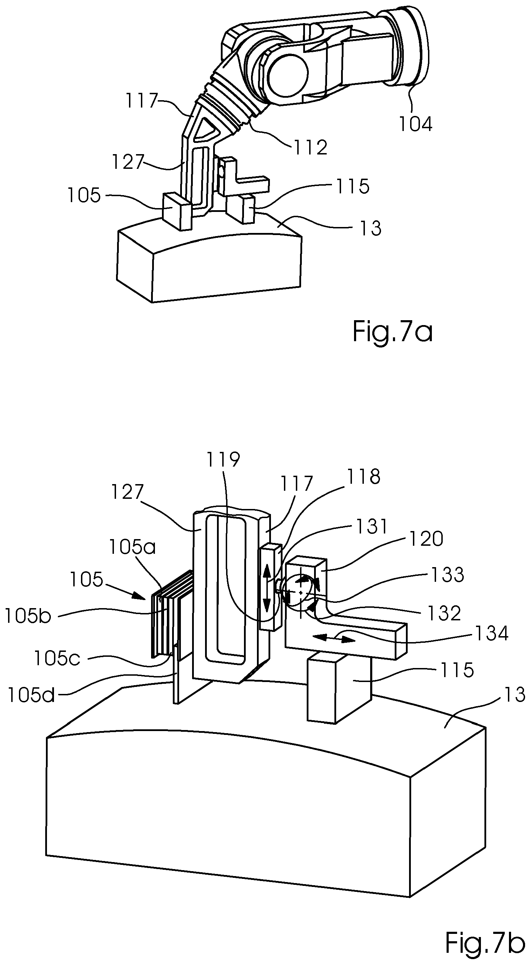

Ein Ausführungsbeispiel für einen zur Ausführung des erfindungsgemäßen Verfahrens ausgebildeten Roboterarm ist in den Figuren 7a und b dargestellt. Hier trägt die am Ende des Roboterarms 104 befestigte Montageplatte 112 eine Tragstruktur 117, an der das Auftragswerkszeug 105 und das Weiterbehandlungswerkzeug 115 wie aus der detaillierteren Darstellung nach Figur 7 ersichtlich befestigt sind. Das Auftragswerkzeug 105 ist ein aus vier Einzelköpfen 105a, b, c und d bestehender Vierfarb-Inkjet-Druckkopf Jeder dieser Einzeldruckköpfe lässt sich über hier nicht näher dargestellte Führungen parallel zu der Strebe 127 der Tragstruktur 117 in Richtung auf die zu bebildernde Fläche 13 verschieben. Das hat dann den Vorteil, dass die Inkjetköpfe 105 a bis d auch in enge Vertiefungen, Sicken, etc. hineinbewegt werden können, um die Oberflächenbereiche dort unter Einhaltung der für eine scharfe Bebilderung erforderlichen Mindestabstände zu erreichen. Für das Trocknungswerkzeug 115 besteht diese Anforderung nicht in gleichem Maße, da eine ausreichende Energiedichte auch durch eine längere Verweildauer oder Erhöhung der Strahlungsintensität erreicht werden kann.

Das Trocknungswerkzeug 115 ist über mehrere verstellbare Bewegungsachsen 131 bis 134 mit der Tragstruktur 117 und damit auch mit dem Auftragswerkzeug also den Inkjetköpfen 105 a bis d verbunden. Mittels eines ersten Schlittens 118, der entlang einer nicht näher dargestellten Führung an der Tragstruktur 117 wie durch den Pfeil 131 symbolisiert in Richtung auf die zu bearbeitende Oberfläche 113 verfahrbar ist, ist über ein Dreh-Schwenkgelenk 119 ein 1-förmiger Träger 120 beweglich gelagert. Der 1-förmige Träger 120 besitzt an seiner Unterseite eine ebenfalls nicht näher dargestellte Linearführung, entlang der sich das Trocknerwerkzeug 115 in Richtung auf die Inkjetköpfe 105 a bis d bewegen lässt. Auf diese Weise kann der Abstand und damit unter Berücksichtigung der Verfahrgeschwindigkeit des an dem Roboterarm 104 befestigten Trägers 117 der Zeitverzug zwischen dem Bebildern der Oberfläche 13 durch einen der vier Inkjetköpfe 105 a bis d und dem anschließenden Trocknen mit Hilfe der z. B. im Trocknerwerkzeug 115 aufgenommenen UV-Lampe eingestellt werden. Mit den über die Pfeile 132 und 133 symbolisierten kombinierten Dreh-Schwenkbewegungen, die das Dreh-Schwenkgelenk 119 ermöglicht, und der Bewegung des Schlittens 118 ist es möglich, mit nur einem Roboterarm 104 den Träger 120 so über die Oberfläche 13 zu bewegen, dass das Trocknerwerkzeug 115 dem von den Inkjetköpfen 105 a bis d hinterlassenen Bebilderungsstreifen folgt, ohne anzuecken. Dazu ist es erforderlich, dass die in der Figur 7b nicht dargestellten Antriebe für die Bewegungsachsen 131 bis 134 bzw. deren Positionen bei der Bahnplanung für den Roboterarm 104 berücksichtigt werden.

### Bezugszeichenliste

- 1: Fahrzeug
- 2: Gelenkarmroboter
- 3: Basis des Gelenkarmroboters
- 4, 104: Roboterarm
- 5, 105: Auftragswerkzeug
- 6: Datenverbindungsleitung
- 7: Bild
- 7a, b: Bildbereich
- 8: Kotflügel
- 10: Türgriff
- 11: Türfalz
- 12, 112: Montageplatte
- 13: Oberfläche
- 15, 115: Trocknungswerkzeug
- 16: Farbleitung
- 17: Düsen
- 19: Rechner
- 26: Vorbehandlungswerkzeug
- 33: Bereich

- 105a-d: Einzelköpfe
- 117: Tragstruktur
- 118: Schlitten
- 119: Dreh-Schwenkgelenk
- 120: 1-förmiger Träger
- 127: Strebe
- 131: Bewegungsachse / Pfeil
- 132: Bewegungsachse / Pfeil
- 133: Bewegungsachse / Pfeil
- 134: Bewegungsachse / Pfeil
- tₛ: Zeitverzug
- t₁ - t₄: Abschnitte

## Patentansprüche

1. Verfahren zum Behandeln der Oberfläche von Gegenständen/Fahrzeugen etc. mit Fluiden, bei dem das Fluid mittels eines rechnergesteuert verfahrbaren ersten Werkzeugs (5; 105) aufgetragen und anschließend mit dem zweiten rechnergesteuert verfahrbaren Werkzeug (15; 115) weiterbehandelt wird, wobei der Zeitverzug (tₛ) zwischen dem Auftragen des Fluids auf den Gegenstand und der anschließenden Weiterbehandlung an das Spreitverhalten des Fluids angepasst ist, **dadurch gekennzeichnet, dass** das Fluid aus mehreren Farben besteht unddass beim Bebildern der Oberfläche (13) mit mehreren Farben in mehreren Abschnitten (t₁, - t₄) erst nur eine Farbe in mehreren Abschnitten aufgetragen und getrocknet wird und danach die nächste Farbe in gleicher Weise abschnittsweise aufgetragen und getrocknet wird.

2. Verfahren nach Anspruch 1,
**dadurch gekennzeichnet,**
**dass** der Zeitverzug (tₛ) zwischen Auftragen und Weiterbehandeln des Fluids für die zu bebildernden Flächenteile (13) konstant gehalten wird.

3. Verfahren nach Anspruch 1,
**dadurch gekennzeichnet,**
**dass** der Zeitverzug (tₛ) abhängig von der Neigung der zu bebilderten Flächenteile und/oder der Materialbeschaffenheit der Oberfläche (13) unterschiedlich eingestellt wird.

4. Verfahren nach einem der Ansprüche 1 bis 3,
**dadurch gekennzeichnet,**
**dass** der benötigte Zeitverzug während der Behandlung der Oberfläche (13) ermittelt und eingestellt wird.

5. Verfahren nach Anspruch 1,
**dadurch gekennzeichnet,**
**dass** das Auftragen und Weiterbehandeln des Fluids intermittierend in Abschnitten (t₁, t₄) mit einem Zeitversatz (tₛ) zwischen dem Verfahren des ersten Werkzeugs (5) und dem Verfahren des zweiten Werkzeugs (15) erfolgt.

6. Verfahren nach Anspruch 5,
**dadurch gekennzeichnet,**
**dass** der Zeitverzug (tₛ) und/oder die Größe und Lage der jeweiligen Abschnitte (t₁, t₂, t₃, t₄) bereits bei der Planung der Bewegungsabläufe der verfahrbaren Werkzeuge (5, 105; 15, 115) berücksichtigt wird.

7. Verfahren nach Anspruch 1,
**dadurch gekennzeichnet,**
**dass** das Auftragen des Fluids und die Weiterbehandlung des Fluids simultan mit einem Ortsversatz zwischen den verfahrbaren Werkzeugen (105, 115) erfolgt.

8. Verfahren nach Anspruch 5,
**dadurch gekennzeichnet,**
**dass** das Fluid aus mehreren Farben besteht und
**dass** beim Bebildern der Oberfläche (13) mit mehreren Farben die Farben in jedem Abschnitt (t₁, t₂, t₃, t₄) einzeln aufgetragen und getrocknet werden, bevor der nächste Abschnitt bebildert wird.

9. Verfahren nach einem der Ansprüche 5 bis 8, wobei die einzelnen Abschnitte an die Geometriemerkmale der zu behandelnden Oberfläche (13) bzw. des zu behandelnden Gegenstands (1) angepasst werden.

10. Verfahren nach Anspruch 9, wobei die Geschwindigkeit für das Aufbringen des Fluids und/oder die Rückfahrgeschwindigkeit des ersten Werkzeugs (5) in einzelnen Abschnitten verändert wird, um den Zeitverzug (tₛ) zwischen dem Auftragen und dem Weiterbehandeln des Fluids konstant zu halten.

11. Verfahren nach einem der Ansprüche 5 bis 10,
**dadurch gekennzeichnet, dass** die Variation des Zeitverzugs (tₛ) innerhalb eines Druckjobs nicht mehr als 50%, vorzugsweise weniger als 20% und am besten weniger als 10% beträgt.

12. Verfahren nach einem der Ansprüche 1 bis 10, wobei der zu behandelnde Gegenstand (1) dreh- bzw. schwenkbar aufgenommen ist und während der Aufbringung des Fluids derart ausgerichtet wird, dass der Bereich der Oberfläche, auf der gerade Farbe aufgetragen wird, möglichst waagerecht verläuft.

13. Verfahren nach einem der Ansprüche 1 bis 12,
**dadurch gekennzeichnet, dass** das Werkzeug (5, 105) zum Auftragen des Fluids ein Inkjet-Druckkopf und das zweite Werkzeug (15, 115) ein Trocknungswerkzeug ist.

14. Vorrichtung zum Durchführen des Verfahrens nach einem der Anspruche 1 bis 11, mit einem Steuerrechner, der eine oder simultan zwei Bahnsteuerungen für ein Auftragswerkzeug (5, 105) und ein Weiterbehandlungswerkzeug (15, 115) bedient und einem Speicher, in dem die zu steuernde(n) Bahn(en) und Verfahrgeschwindigkeiten abgelegt sind, derart, dass sich ein an das Spreitverhalten der aufzutragenden Fluid angepasster Zeitverzug (tₛ) für die Orte ergibt, die von den beiden Werkzeugen (5, 105; 15, 115) nacheinander überfahren werden,
**dadurch gekennzeichnet,**
**dass** das Weiterbehandlungswerkzeug (115) über eine oder mehrere Bewegungsachsen (131-134) mit dem Auftragswerkzeug (105) verbunden ist und die Lage des Weiterbehandlungswerkzeugs (115) zum Auftragswerkzeug (105) über die Achsen (131-134) verstellbar ist.

15. Vorrichtung nach Anspruch 14, wobei an einem Roboterarm (4) mehrere in unterschiedlichen Richtungen abstehende Werkzeuge (5, 15, 26), ein Magazin oder eine Wechselaufnehme an seinem Ende trägt und der Steuerrechner in einem an die Spreitzeit (tₛ) der Farbe angepassten Rhythmus ein Auftragswerkzeug und ein Weiterbehandlungswerkzeug (15) in Arbeitsstellung bringt.

16. Vorrichtung nach Anspruch 15, wobei das Magazin ein Revolverkopf ist, dessen Drehachse durch eine vorhandene Roboterachse (4c) oder durch eine aus Bewegungen um mehrere Achsen erzeugte virtuelle Achse realisiert ist.

17. Vorrichtung nach Anspruch 16, wobei der Revolverkopf zusätzlich ein Werkzeug (26) zur Vorbehandlung der zu bebildernden Oberfläche und/oder weitere Farbauftragswerkzeuge trägt.

18. Vorrichtung nach einem der Ansprüche 14 bis 17, wobei das Auftragswerkzeug (105) aus mehreren Einzelwerkzeugen (105a-d) besteht, die separat in Richtung auf die zu behandelnde Oberfläche (13) ausfahrbar sind.

19. Vorrichtung nach Anspruch 18, wobei der Abstand zwischen dem Weiterbehandlungswerkzeug (115) und dem Auftragswerkzeug (105) einstellbar ist, derart, dass sich abhängig von der Verfahrgeschwindigkeit der gewünschte Zeitverzug (tₛ) ergibt.

20. Vorrichtung nach Anspruch 18 oder 19, wobei die Bewegungsachsen (131-134) rechnergesteuerte Antriebe zugeordnet sind.

21. Vorrichtung nach Anspruch 18, wobei das Bewegungsprofil für das oder die Weiterbehandlungswerkzeug(e) (115) mit der Bahnsteuerung für das Auftragswerkzeug (105) korreliert und gespeichert ist/sind.

## Claims

1. Method for treating the surfaces of objects/vehicles etc. with fluids, wherein the fluid is applied by means of a first tool (5; 105) movable in a computer-controlled way and is subsequently further treated by means of the second tool (15; 115) movable in a computer-controlled way,
wherein the time lag (tₛ) between the application of the fluid to the object and the subsequent further treatment is adapted to the spreading behaviour of the fluid,
**characterized in**
**that** the fluid consists of multiple colour inks and that when images are applied to the surface (13) in multiple colours and multiple sections (t_{1'},-t₄), only one colour ink is initially applied to multiple sections and dried and subsequently the next colour is applied in the same way in sections and dried.

2. Method according to claim 1,
**characterized in**
**that** the time lag (tₛ) between the application and the further treatment of the fluid is maintained constant for the surface parts (13) to be imaged.

3. Method according to claim 1,
**characterized in**
**that** the time lag (tₛ) is set differently as a function of the inclination of the surface parts to be imaged and/or of the material properties of the surface (13).

4. Method according to any one of claims 1 to 3,
**characterized in**
**that** the required time lag is established and set during the treatment of the surface (13).

5. Method according to claim 1,
**characterized in**
**that** the application and further treatment of the fluid is carried out intermittently in sections (t₁, t₄) at a time lag (tₛ) between the movement of the first tool (5) and the movement of the second tool (15).

6. Method according to claim 5,
**characterized in**
**that** in the planning of the sequences of movements of the movable tools (5, 105; 15, 115) the time lag (tₛ) and/or the size and position of the respective sections (t₁, t₂, t₃, t₄) is already factored in.

7. Method according to claim 1,
**characterized in**
**that** the application of the fluid and the further treatment of the fluid occur simultaneously with a location offset between the movable tools (105, 115).

8. Method according to claim 5,
**characterized in**
**that** the fluid consists of multiple colour inks and that when the surface (13) is imaged with multiple colour inks, the inks are individually applied to every section (t₁, t₂, t₃, t₄) and dried before the next section is imaged.

9. Method according to any one of claims 5 to 8,
wherein the individual sections are adapted to the geometric features of the surface (13) to be treated and/or to the object (1) to be treated.

10. Method according to claim 9,
wherein the speed of the application of the fluid and/or the return speed of the first tool (5) in individual sections is changed to keep the time lag (tₛ) between the application and the further treatment of the fluid constant.

11. Method according to any one of claims 5 to 10,
**characterized in**
**that** the variation of the time lag (tₛ) within a print job is not more than 50%, preferably less than 20%, and most preferably less than 10%.

12. Method according to any one of claims 1 to 10,
wherein the object (1) to be treated is received in a way to be rotatable or pivotable and is oriented during the application of the fluid in such a way that the surface area that currently receives ink is as horizontal as possible.

13. Method according to any one of claims 1 to 12,
**characterized in**
**that** the tool (5, 105) for applying the fluid is an inkjet print head and the second tool (15, 115) is a dryer tool.

14. Device for implementing the method according to any one of claims 1 to 11, comprising a control computer operating one or simultaneously two path controls for an application tool (5, 105) and a further treatment tool (15, 115), and a memory for saving the path(s) to be controlled and the speeds of movement in such a way that there is a time lag (tₛ) between the locations that the two tools (5, 105; 15, 115) successively move over, the time lag adapted to the spreading behaviour of the fluid to be applied,
**characterized in**
**that** the further treatment tool (115) is connected to the application tool (105) by one or more axes of movement (131-134) and that the position of the further treatment tool (115) relative to the application tool (105) is adjustable by means of the axes (131-134).

15. Device according to claim 14,
wherein a robot arm (4) carries multiple tools (5, 15, 26) protruding in different directions, a magazine or a tool-changer mount on its end and wherein the control computer moves an application tool and a further treatment tool (15) into an operating position in accordance with a rhythm that is adapted to the spreading time (tₛ) of the ink.

16. Device according to claim 15,
wherein the magazine is a revolver head whose axis of rotation is an existing robot axis (4c) or a virtual axis created by movements about multiple axes.

17. Device according to claim 16,
wherein the revolver head additionally carries a tool (26) for pre-treating the surface to be imaged and/or further ink application tools.

18. Device according to any one of claims 14 to 17,
wherein the application tool (105) consists of multiple individual tools (105a-d) that are separately extended in the direction of the surface (13) to be treated.

19. Device according to claim 18,
wherein the distance between the further treatment tool (115) and the application tool (105) is adjustable in such a way that, depending on the movement speed, the result is the desired time lag (tₛ).

20. Device according to claim 18 or 19,
wherein the axes of movement (131-134) are assigned computer-controlled drives.

21. Device according to claim 18,
wherein the movement profile(s) for the further treatment tool(s) (115) is/are correlated with the path control for the application tool (105) and saved.

## Revendications

1. Procédé pour le traitement de la surface d'objets/véhicules etc. avec des fluides,
le fluide étant appliqué au moyen d'un premier outil mobile (5 ; 105) commandé par ordinateur et étant ensuite traité par le second outil mobile (15 ; 115) commandé par ordinateur,
le décalage de temps (tₛ) entre l'application du fluide sur l'objet et le traitement ultérieur étant adapté au comportement d'étalement du fluide,
**caractérisé en ce**
**que** le fluide se compose de plusieurs encres et que lors de la formation d'images sur la surface (13) avec plusieurs encres en plusieurs sections (t₁,- t₄), une seule encre est appliquée, séchée en plusieurs sections et ensuite l'encre suivante est appliquée et séchée par section de manière identique.

2. Procédé selon la revendication 1,
**caractérisé en ce**
**que** le décalage de temps (tₛ) entre l'application et le traitement postérieur du fluide est maintenu constant pour les parties de surface (13) devant recevoir les images à former.

3. Procédé selon la revendication 1,
**caractérisé en ce**
**que** le décalage de temps (tₛ) dépend de l'inclinaison des parties de surface recevant les images, et/ou de la propriété du matériau de la surface (13) est réglé différemment.

4. Procédé selon l'une des revendications 1 à 3,
**caractérisé en ce**
**que** le décalage de temps (tₛ) nécessaire est déterminé et réglé pendant le traitement de la surface (13).

5. Procédé selon la revendication 1,
**caractérisé en ce**
**que** l'application et le traitement ultérieur du fluide s'effectuent par intermittence en sections (t₁, t₄) avec un décalage de temps (tₛ) entre le passage du premier outil (5) et le passage du second outil (15).

6. Procédé selon la revendication 5,
**caractérisé en ce**
**que** le décalage de temps (tₛ) et/ou la taille et la position des sections respectives sont pris en compte lors de la planification des cycles de déplacement des outils mobiles (5, 105 ; 15, 115) disponibles.

7. Procédé selon la revendication 1,
**caractérisé en ce**
**que** l'application de fluide et le traitement ultérieur du fluide s'effectuent simultanément avec un décalage de position entre les deux outils mobiles (105, 115).

8. Procédé selon la revendication 5,
**caractérisé en ce**
**que** le fluide se compose de plusieurs encres, et
lors de la formation d'images sur la surface (13) avec plusieurs encres, les encres sont appliquées et séchées individuellement dans chaque section (t₁, t₂, t₃, t₄), avant que les images ne soient formées dans la section suivante.

9. Procédé selon l'une des revendications 5 à 8,
chaque section devant être adaptée aux caractéristiques géométriques de la surface (13) à traiter, respectivement à l'objet (1) à traiter.

10. Procédé selon la revendication 9,
la vitesse pour l'application du fluide et/ou la vitesse de retour du premier outil (5) étant modifiées dans chacune des sections, pour maintenir le décalage de temps (tₛ) constant entre l'application et traitement ultérieure du fluide.

11. Procédé selon l'une des revendications 5 à 10,
**caractérisé en ce**
**que** la variation du décalage de temps (tₛ) pendant une tâche d'impression est inférieure à 50 %, de préférence inférieure à 20 % et au mieux inférieure à 10 %.

12. Procédé selon l'une des revendications 1 à 10,
l'objet (1) à traiter étant réceptionné de manière rotative respectivement pivotante et pendant l'application du fluide étant orienté de sorte que la zone de la surface, sur laquelle l'application de l'encre est en cours, s'étend le plus horizontalement possible.

13. Procédé selon l'une des revendications 1 à 12,
**caractérisé en ce**
**que** l'outil (5, 105) pour l'application du fluide est une tête d'impression à jet d'encre, et le second outil (15, 105) est un outil de séchage.

14. Dispositif pour la mise en oeuvre du procédé selon l'une des revendications 1 à 11, comprenant
un ordinateur de commande, qui dirige une ou simultanément deux commandes de bande pour un outil d'application (5, 105) et un outil de traitement ultérieur (15, 115) et
une mémoire, dans laquelle est/sont déposé(e)s la/les bande(s) à commander, la/les vitesse(s) de déplacement de manière à obtenir un décalage de temps (tₛ) adapté au comportement d'écartement du fluide à appliquer, pour les endroits qui sont traversés successivement par les deux outils (5, 105 ; 15, 115),
**caractérisé en ce**
**que** l'outil de traitement ultérieur (115) est relié par un ou plusieurs axes de déplacement (131-134) par l'outil d'application (105) et la position entre l'outil de traitement ultérieur (115) et l'outil d'application (105) est réglable par les axes (131-134).

15. Dispositif selon la revendication 14,
un magasin ou un poste de transfert portant, à son extrémité sur un bras de robot (4), plusieurs outils (5, 15, 26) faisant saillie dans différentes directions, et l'ordinateur de commande amenant en position de travail un outil d'application et un outil de traitement ultérieur (15) à une cadence adaptée à la durée d'écartement (t₂) de l'encre.

16. Dispositif selon la revendication 15,
le magasin étant une tête revolver dont l'axe de rotation est réalisé par un axe de robot existant (4c) ou par un axe virtuel réalisé à partir de déplacements autour de plusieurs axes.

17. Dispositif selon la revendication 16,
la tête révolver portant en supplément un outil (26) pour le pré-traitement de la surface recevant les images et/ou autres outils d'application d'encre.

18. Dispositif selon l'une des revendications 14 à 17,
l'outil d'application (105) se composant de plusieurs outils individuels (105a-d) extractibles séparément en direction de la surface (13) à traiter.

19. Dispositif selon la revendication 18
la distance entre l'outil de transformation (115) et l'outil d'application (105) étant réglable de sorte que le décalage de temps (tₛ) est déterminée en fonction de la vitesse de déplacement du décalage de temps (tₛ) souhaité.

20. Dispositif selon la revendication 18 ou 19,
les axes de déplacement (131-134) étant associés à des entraînements commandés par ordinateur.

21. Dispositif selon la revendication 18,
le profil de déplacement pour le ou les outils transformation (115) étant comparé(s)et stocké(s) par la commande de bande pour l'outil d'application (105).
